(19) Europäisches Patentamt
European Patent Office
Office européen des brevets

(11) **EP 2 532 863 A1**

(12) **EUROPEAN PATENT APPLICATION**
published in accordance with Art. 153(4) EPC

(43) Date of publication:
**12.12.2012 Bulletin 2012/50**

(51) Int Cl.:
*F02D 29/00* *(2006.01)*

(21) Application number: **11813859.3**

(22) Date of filing: **20.04.2011**

(86) International application number:
**PCT/JP2011/059741**

(87) International publication number:
**WO 2012/144034 (26.10.2012 Gazette 2012/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **TOYOTA JIDOSHA KABUSHIKI KAISHA**
**Toyota-shi**
**Aichi 471-8571 (JP)**

(72) Inventors:
• **NAGAI, Kazunari**
  **Aichi 471-8571 (JP)**
• **KINOSHITA, Tomonori**
  **Aichi 471-8571 (JP)**

(74) Representative: **TBK**
**Bavariaring 4-6**
**80336 München (DE)**

(54) **ENGINE CONTROL DEVICE**

(57)    The engine control apparatus (ECU 8) includes a reference setting unit 82 that sets a reference rotational speed N0 that is a rotational speed serving as a reference for an engine speed Ne based on a gear ratio RA of a manual transmission 2 and a vehicle speed V, a first determination unit 83 that determines whether an input shaft rotational speed (Ni) of the manual transmission 2 obtained when a clutch 3 is in an disengaged state is less than the reference rotational speed N0 set by the reference setting unit 82, and a control execution unit 89 that controls an engine output based on the reference rotational speed N0 in a case where the first determination unit 83 has determined that the input shaft rotational speed Ni of the manual transmission 2 is less than the reference rotational speed NO. In this manner, an engine 1 can be prevented from stalling when the clutch 3 is shifted from the disengaged state to an engaged state in a travel state in which any one of forward gears of the manual transmission 2 is in engagement.

FIG.5

**Description**

[Technical Field]

The present invention relates to an engine control apparatus that, in a vehicle on which an engine, a manual transmission and a clutch that is provided between the engine and the manual transmission and is configured to be capable of switching a disengaged state and an engaged state are mounted, controls the speed of the engine when the clutch is shifted from the disengaged state to the engaged state in a travel state in which any one of the forward gears of the manual transmission is in engagement.

[Background Art]

Conventionally, when a driver starts a vehicle on which a clutch and a manual transmission (MT) are mounted, from a state in which the clutch is disengaged by the driver depressing the clutch pedal, the driver gradually releases the clutch pedal while gradually depressing the accelerator pedal so as to achieve a half-engaged state (so-called the state of half-engaged clutch) in which the clutch is lightly engaged, thereby preventing engine stall. In order to perform such a series of starting operations smoothly, the driver needs to have a certain level of skill.

Therefore, various apparatuses, methods and the like for preventing the engine from stalling when a vehicle is started have been proposed. For example, a control apparatus of an internal combustion engine is disclosed in which when a determination is made that a vehicle is to be started, the larger of a required crankshaft torque and a minimum crankshaft torque for starting a vehicle is set as a target crankshaft torque for starting the vehicle (see PTL 1).

[Citation List]

[Patent Literature]

[PTL 1] JP 2007-170316A

[Disclosure of Invention]

[Technical Problems]

However, in the control apparatus of an internal combustion engine disclosed in the above-listed PTL 1, engine stall may occur when the clutch is shifted from the disengaged state to the engaged state in a travel state in which any one of the forward gears of the manual transmission is in engagement. Also, when the driver depresses the accelerator pedal in order to supplement power shortage, fuel efficiency of the vehicle may deteriorate.

The present invention has been achieved in view of the above-described problems, and aims at providing an engine control apparatus that can prevent the engine from stalling when the clutch is shifted from the disengaged state to the engaged state in a travel state in which any one of the forward gears of the manual transmission is in engagement.

[Means for Solving the Problems]

In order to solve the above-described problems, an engine control apparatus according to the present invention is configured as described below.

Specifically, an engine control apparatus of the present invention is an engine control apparatus that, in a vehicle on which an engine, a manual transmission and a clutch that is provided between the engine and the manual transmission and is capable of switching a disengaged state and an engaged state are mounted, controls the speed of the engine when the clutch is shifted from the disengaged state to the engaged state in a travel state in which any one of forward gears of the manual transmission is in engagement, and the engine control apparatus includes reference setting unit that sets a reference rotational speed that is a rotational speed serving as a reference for an engine speed, based on a gear ratio of the manual transmission and a vehicle speed, first determination unit that determines whether an input shaft rotational speed of the manual transmission obtained when the clutch is in the disengaged state is less than the reference rotational speed set by the reference setting unit, and control execution unit that controls an engine output based on the reference rotational speed in a case where the first determination unit has determined that the input shaft rotational speed of the manual transmission is less than the reference rotational speed.

With the engine control apparatus configured as described above, the reference rotational speed that is a rotational speed serving as a reference for an engine speed is set based on the gear ratio of the manual transmission and the vehicle speed, and whether an input shaft rotational speed obtained when the clutch is in the disengaged state is less than the set reference rotational speed is determined. Then, in the case where it has been determined that the input shaft rotational speed of the manual transmission is less than the reference rotational speed, the engine output is controlled based on the reference rotational speed Therefore, the engine can be prevented from stalling when the clutch is shifted from the disengaged state to the engaged state in a travel state in which any one of the forward gears of the manual transmission is in engagement (hereinafter, also simply referred to as "at the time of clutch engagement").

That is, since the reference rotational speed that is a rotational speed serving as a reference for the engine speed is set based on the gear ratio of the manual transmission and the vehicle speed, the reference rotational speed can be set to an appropriate value. Also, the engine output is controlled based on the reference rotational speed in the case where the input shaft rotational speed of the manual transmission obtained when the clutch is in the disengaged state is less than the reference rotational speed. Thus, for example, by controlling the engine output such that the engine speed matches the reference rotational speed when the clutch has reached the engagement start point from the disengaged state, the engine can be prevented from stalling at the time of clutch engagement.

Also, it is preferable that the engine control apparatus of the present invention further includes position detection unit that detects a stroke of the clutch, engagement determination unit that determines whether the clutch has reached an engagement start point from the disengaged state based on a result of detection performed by the position detection unit, and second determination unit that determines whether the engine speed is less than the reference rotational speed in a case where the engagement determination unit has determined that the engagement start point has been reached, and the control execution unit controls the engine output based on the reference rotational speed in a case where the second determination unit has determined that the engine speed is less than the reference rotational speed.

With the engine control apparatus configured as described above, the stroke of the clutch is detected, and whether the clutch has reached the engagement start point from the disengaged state is determined based on the detection result. Then, whether the engine speed is less than the reference rotational speed is determined in the case where it has been determined that the clutch has reached the engagement start point. If it has been determined that the engine speed is less than the reference rotational speed, the engine output is controlled based on the reference rotational speed. Therefore, the engine can be reliably prevented from stalling at the time of clutch engagement.

That is, the engine output is controlled based on the reference rotational speed when it is determined that the clutch has reached the engagement start point from the disengaged state. Thus, for example, by increasing the engine output such that the engine speed matches the reference rotational speed, the engine can be prevented from stalling at the time of clutch engagement.

Also, with the engine control apparatus of the present invention, it is preferable that the control execution unit controls the engine output such that the engine speed matches the reference rotational speed in the case where the second determination unit has determined that the engine speed is less than the reference rotational speed.

With the engine control apparatus configured as described above, the engine output is controlled such that the engine speed matches the reference rotational speed when it has been determined that the engine speed is less than the reference rotational speed, and accordingly the engine output is increased. Therefore, the engine can be further reliably prevented from stalling at the time of clutch engagement.

Also, with the engine control apparatus of the present invention, it is preferable that the engine control apparatus further includes third determination unit that determines whether the clutch is in a completely engaged state, and the control execution unit continues control of the engine output such that the engine speed matches the reference rotational speed, until the third determination unit determines that the clutch is in the completely engaged state.

With the engine control apparatus configured as described above, whether the clutch is in the completely engaged state is determined. Then, control of the engine output is continued such that the engine speed matches the reference rotational speed, until it is determined that the clutch is in the completely engaged state. Therefore, the engine can be further reliably prevented from stalling at the time of clutch engagement.

Specifically, control of the engine output is continued such that the engine speed matches the reference rotational speed, from when it is determined that the clutch has reached the engagement start point from the disengaged state until the clutch reaches the completely engaged state. As a result, control for increasing the engine output is continued, and thus the engine can be further reliably prevented from stalling at the time of clutch engagement.

Also, with the engine control apparatus of the present invention, it is preferable that the third determination unit determines that the clutch is in the completely engaged state when the input shaft rotational speed of the manual transmission has reached the reference rotational speed after the engagement determination unit has determined that the engagement start point has been reached.

With the engine control apparatus configured as described above, it is determined that the clutch has reached the completely engaged state when the input shaft rotational speed of the manual transmission has reached the reference rotational speed after it has been determined that engagement start point has been reached. Therefore, achievement of the completely engaged state can be precisely determined with a simple configuration.

Also, with the engine control apparatus of the present invention, it is preferable that the engine control apparatus further includes fourth determination unit that determines whether an engine speed obtained when the clutch is in the disengaged state is greater than or equal to the reference rotational speed set by the reference setting unit, and the control execution unit controls the engine output such that the engine speed matches the reference rotational speed in a case where the fourth determination unit has determined that the engine speed is greater than or equal to the reference rotational speed.

With the engine control apparatus configured as described above, whether the engine speed obtained when the clutch is in the disengaged state is greater than or equal to the reference rotational speed is determined, and in the case where it is determined that the engine speed is greater than or equal to the reference rotational speed, the engine output is controlled such that the engine speed matches the reference rotational speed. Therefore, deterioration of fuel efficiency of the vehicle at the time of clutch engagement can be prevented.

That is, the engine output is controlled such that the engine speed matches the reference rotational speed in the case where it is determined that the engine speed obtained when the clutch is in the disengaged state is greater than or equal to the reference rotational speed, and thus control for decreasing the engine output is performed. Therefore, deterioration of fuel efficiency of the vehicle at the time of clutch engagement can be prevented.

Also, with the engine control apparatus of the present invention, it is preferable that the engine control apparatus further includes position detection unit that detects a stroke of the clutch, and engagement determination unit that determines whether the clutch has reached the engagement start point from the disengaged state based on a result of detection performed by the position detection unit, and the control execution unit continues control of the engine output such that the engine speed matches the reference rotational speed, until the engagement determination unit determines that the engagement start point has been reached.

With the engine control apparatus configured as described above, the stroke of the clutch is detected, and whether the clutch has reached the engagement start point from the disengaged state is determined based on the detection result. Control of the engine output is continued such that the engine speed matches the reference rotational speed until it is determined that the engagement start point has been reached. Therefore, deterioration of fuel efficiency of the vehicle at the time of clutch engagement can be further reliably prevented.

That is, since control of the engine output is continued such that the engine speed matches the reference rotational speed until it is determined that the engagement start point has been reached, control for decreasing the engine output is continues. Therefore, deterioration of fuel efficiency of the vehicle at the time of clutch engagement can be further reliably prevented.

Also, with the engine control apparatus of the present invention, it is preferable that the reference setting unit sets, as the reference rotational speed, an engine speed that is necessary for traveling at an appropriate vehicle speed predetermined in association with a gear ratio, while maintaining the gear ratio.

With the engine control apparatus configured as described above, an engine speed that is necessary for traveling at an appropriate vehicle speed predetermined in association with a gear ratio, while maintaining the gear ratio is set as the reference rotational speed, and thus the reference rotational speed can be set to an appropriate value.

Specifically, for example, by setting, as the appropriate vehicle speed, a vehicle speed at which the engine speed is a rotational speed (e.g., 1000 rpm) greater than the idle speed (e.g., 800 rpm) when the clutch is completely engaged, the reference rotational speed can be set to an appropriate value (in this example, 1000 rpm).

Also, with the engine control apparatus of the present invention, it is preferable that the reference setting unit sets, as the reference rotational speed, a rotational speed that is obtained by adding a predetermined positive rotational speed to an idle speed of the engine.

With the engine control apparatus configured as described above, a rotational speed (in this example, 1000 rpm) obtained by adding a predetermined positive rotational speed (e.g., 200 rpm) to the idle speed of the engine (e.g., 800 rpm) is set as the reference rotational speed, and thus the reference rotational speed can be set to an appropriate value (in this example, 1000 rpm).

Also, with the engine control apparatus of the present invention, it is preferable that the reference setting unit obtains, based on a gear ratio, a vehicle speed and an inclination angle of a vehicle length direction, an engine torque that is necessary for traveling at an appropriate vehicle speed while maintaining the gear ratio, and obtains an engine speed corresponding to the obtained engine torque as the reference rotational speed.

With the engine control apparatus configured as described above, an engine torque that is necessary for traveling at the appropriate vehicle speed while maintaining the gear ratio is obtained based on the gear ratio, the vehicle speed and the inclination angle in the vehicle length direction, and an engine speed corresponding to the obtained engine torque is obtained as the reference rotational speed. Therefore, the reference rotational speed can be set to an appropriate value.

Specifically, since the engine torque is obtained based on the inclination angle in the vehicle length direction, for example, the larger the upward inclination (or the smaller the downward inclination), the larger the value obtained as the engine torque, and consequently a larger value is obtained as the reference rotational speed. Therefore, the reference rotational speed can be set to an appropriate value.

[Effects of the Invention]

According to the engine control apparatus of the present invention, a reference rotational speed that is a rotational speed serving as a reference for an engine speed is set based on a gear ratio of the manual transmission and a vehicle speed. Therefore, the reference rotational speed can be set to an appropriate value. Also, the engine output is controlled based on the reference rotational speed in the case where it is determined that the input shaft rotational speed of the manual transmission is less than the reference rotational speed. Thus, for example, by increasing the engine output such that the engine speed matches the reference rotational speed when the clutch has reached the engagement start point from the disengaged state, the engine can be prevented from stalling when the clutch is shifted from the disengaged state to the engaged state in a travel state in which any one of the forward gears of the manual transmission is in engagement.

[Brief Description of Drawings]

[FIG. 1]

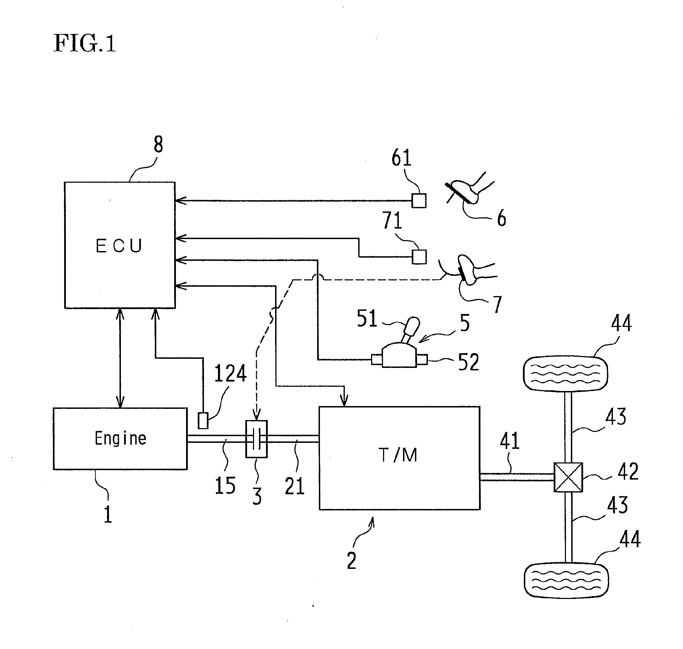

FIG. 1 is a configuration diagram showing an example of a power train of a vehicle on which an engine control apparatus of the present invention is mounted and a control system thereof.

[FIG. 2]

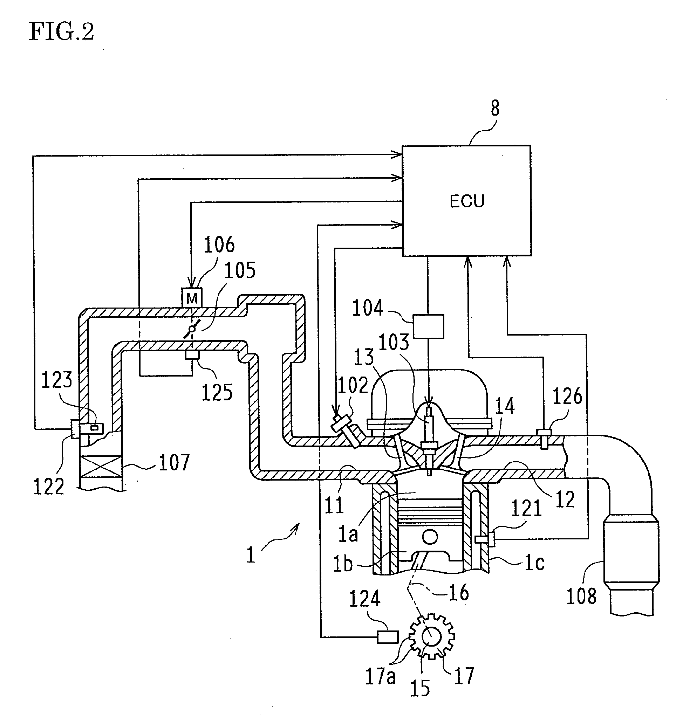

FIG. 2 is a configuration diagram showing an example of the engine mounted on the vehicle shown in FIG. 1.

[FIG. 3]

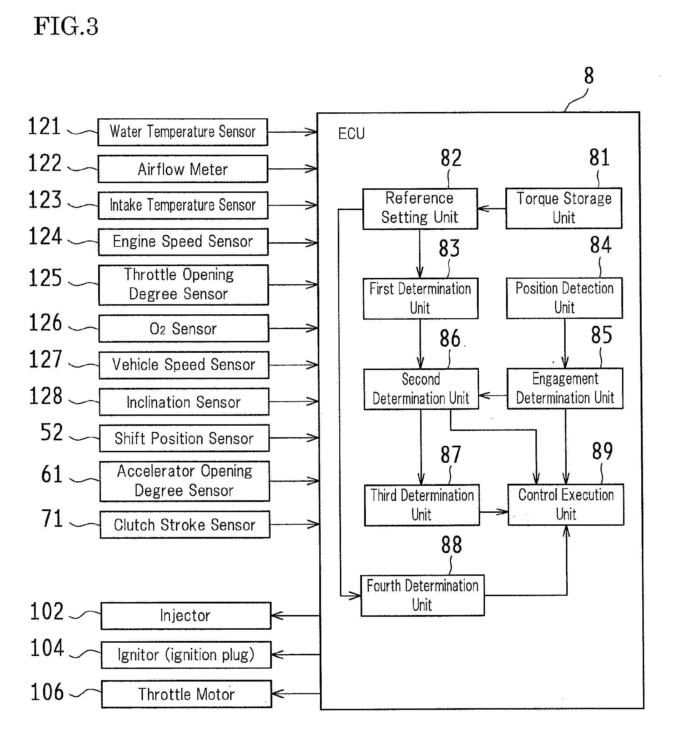

FIG. 3 is a functional configuration diagram showing an example of the engine control apparatus mounted on the vehicle shown in FIG. 1.

[FIG. 4]

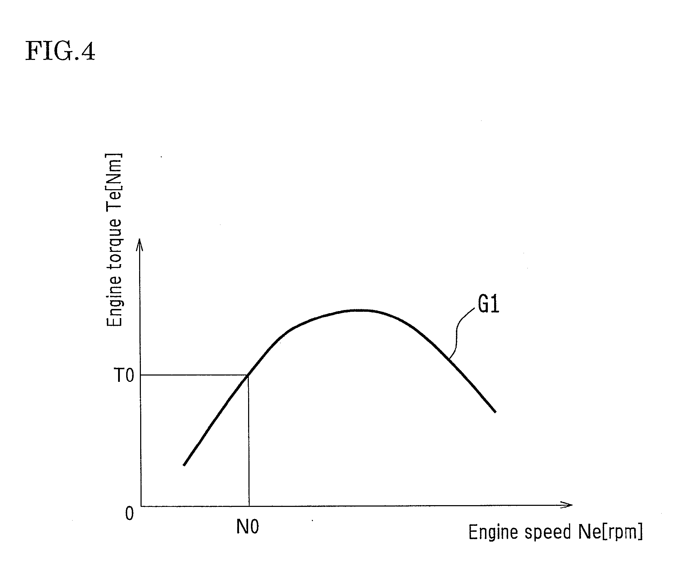

FIG. 4 is a graph showing an example of the relation between the engine speed and the engine torque.

[FIG. 5]

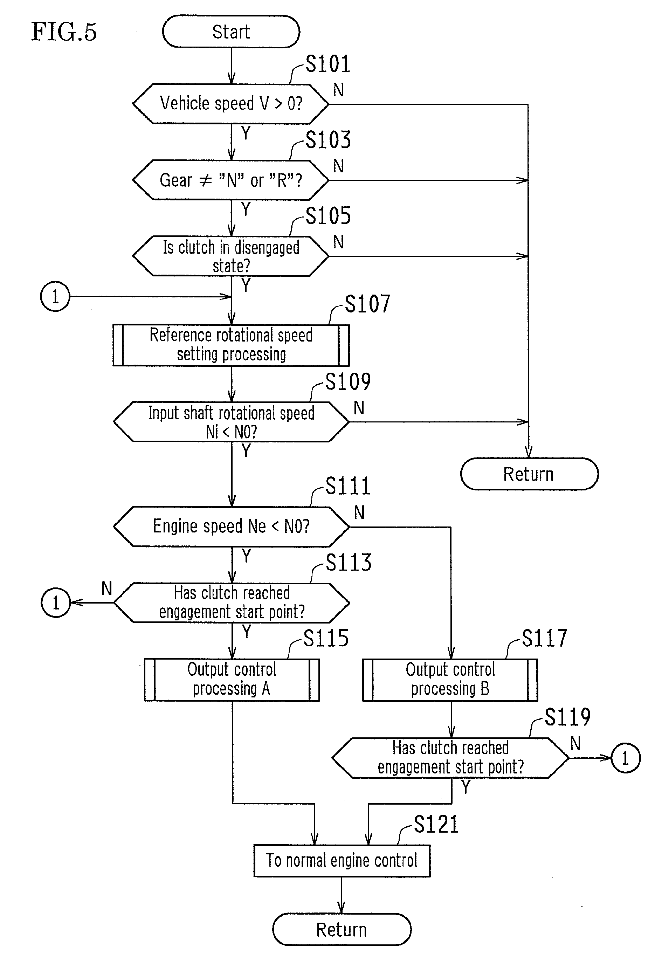

FIG. 5 is a flowchart illustrating an example of an operation performed by the engine control apparatus shown in FIG. 3.

[FIG. 6]

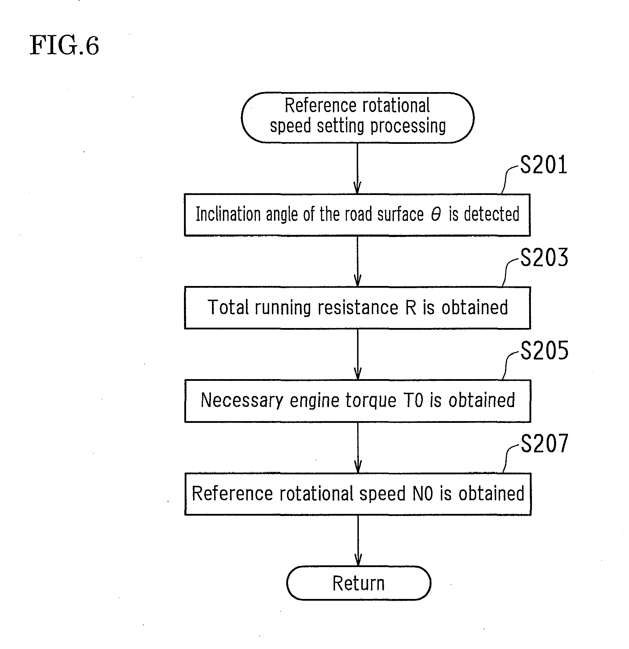

FIG. 6 is a detailed flowchart illustrating an example of reference rotational speed setting processing executed in step S107 of the flowchart shown in FIG. 5.

[FIG. 7]

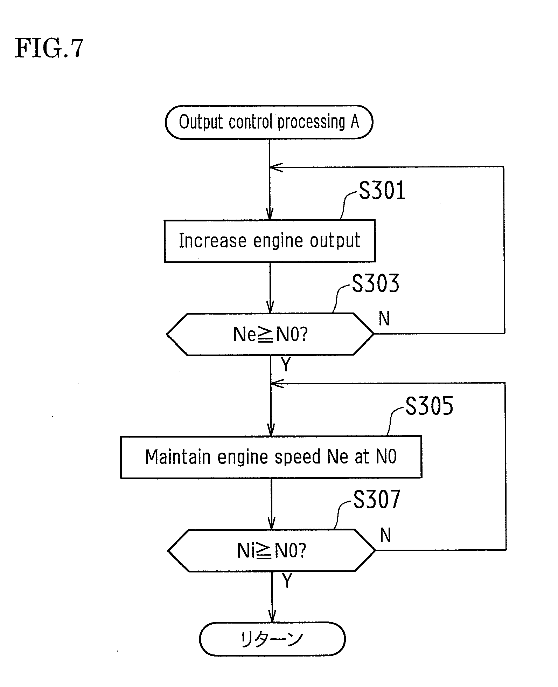

FIG. 7 is a detailed flowchart illustrating an example of output control processing A executed in step S115 of the flowchart shown in FIG. 5.

[FIG. 8]

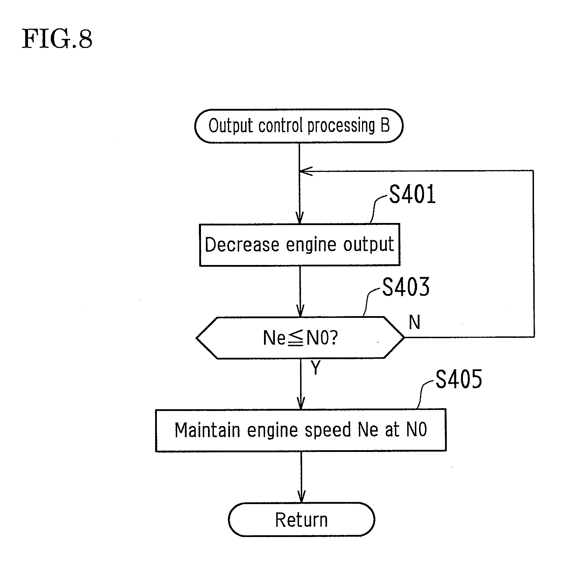

FIG. 8 is a detailed flowchart illustrating an example of output control processing B executed in step S117 of the flowchart shown in FIG. 5.

[FIG. 9]

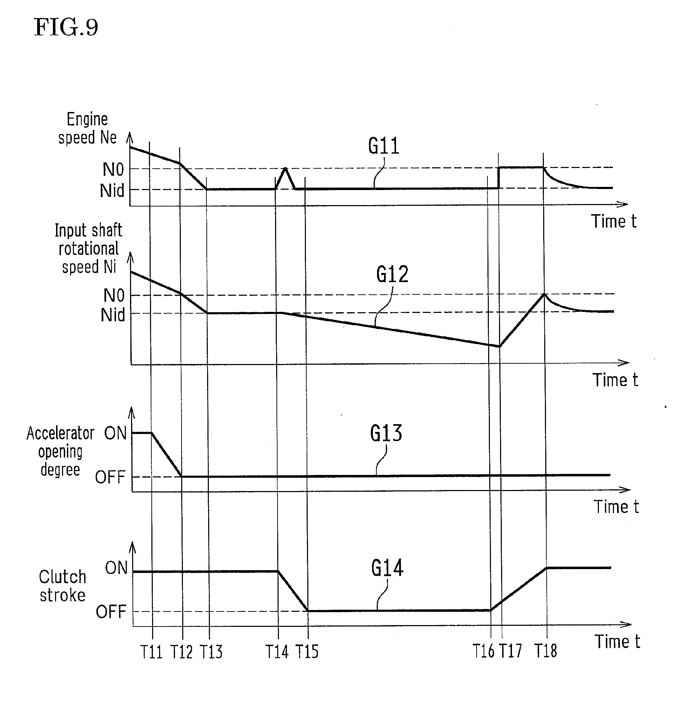

FIG. 9 is a timing chart illustrating an example of an operation performed by the engine control apparatus shown in FIG. 3 (mainly, output control processing A).

[FIG. 10]

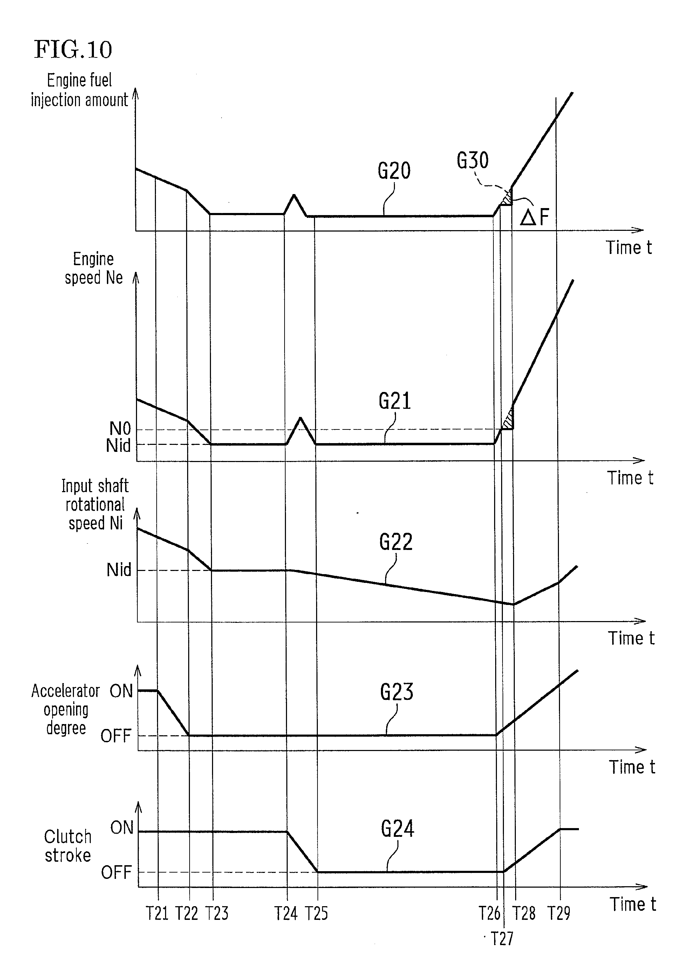

FIG. 10 is a timing chart illustrating an example of the operation performed by the engine control apparatus shown in FIG. 3 (mainly, output control processing B).

[Mode for Carrying Out the Invention]

Embodiments of the present invention will be described below with reference to the drawings.

FIG. 1 is a configuration diagram showing an example of a power train of a vehicle on which an engine control apparatus of the present invention is mounted and a control system thereof. The vehicle according to the present embodiment is a vehicle of FR (front engine and rear drive) type, and includes an engine 1, a manual transmission (MT) 2, a clutch 3, a shifting device 5, an accelerator pedal 6, a clutch pedal 7, an ECU (Electronic Control Unit) 8, and the like. The engine control apparatus of the present invention corresponds to the ECU 8 and a clutch stroke sensor 71 described below.

As shown in FIG. 1, a crankshaft 15 serving as the output shaft of the engine 1 is connected to the clutch 3. Also, when the clutch 3 is in the engaged state, driving force (driving torque) of the engine 1 is transmitted to drive wheels 44 via the crankshaft 15, the clutch 3, an input shaft 21, the manual transmission 2, a drive shaft 41, a differential gear device 42 and axles 43.

Also, near the crankshaft 15, an engine speed sensor 124 that detects the rotational speed of the crankshaft 15 as an engine speed Ne is disposed. The engine speed Ne detected by the engine speed sensor 124 is output to the ECU 8.

In the shifting device 5, a shift lever 51 and a shift position sensor 52 are disposed. The shift lever 51 is held by the driver, and is used for performing an operation for changing the shift position. The shift position sensor 52 is a sensor that detects the shift position. In the accelerator pedal 6, an accelerator opening degree sensor 61 that detects an accelerator opening degree is disposed. In addition, in the clutch pedal 7, the clutch stroke sensor 71 that detects a clutch stroke is disposed. Note that the clutch stroke sensor 71 corresponds to a part of the "position detection unit" in the claims. The shift position detected by the shift position sensor 52, the accelerator opening degree detected by the accelerator opening degree sensor 61 and the clutch stroke detected by the clutch stroke sensor 71 are output to the ECU 8 (see FIG. 3).

- Engine 1 -

First of all, with reference to FIG. 2, the engine 1 according to the present embodiment will be described. FIG. 2 is a configuration diagram showing an example of the engine 1 mounted on the vehicle shown in FIG. 1. The engine 1 is, for example, a multi-cylinder gasoline engine, and includes a piston 1b forming a combustion chamber 1a and the crankshaft 15 serving as the output shaft (see FIG. 1). The piston 1b is connected to the crankshaft 15 via a connecting rod 16. Also, reciprocating motion of the piston 1b is converted to rotational motion of the crankshaft 15 by the connecting rod 16.

A signal rotor 17 is provided in the crankshaft 15. In the outer periphery of the signal rotor 17, a plurality of projections 17a are formed at equal intervals. In the neighborhood of a side of the signal rotor 17, the engine speed sensor 124 is disposed. The engine speed sensor 124 is, for example, an electromagnetic pickup, and generates, when the crankshaft 15 rotates, a pulsed signal (output pulse) including pulses corresponding to the number of projections 17a that pass the position opposing the engine speed sensor 124.

An ignition plug 103 is provided in the combustion chamber 1a of the engine 1. The ignition timing of the ignition plug 103 is adjusted by an ignitor 104. The ignitor 104 is controlled by the ECU 8. In a cylinder block 1c of the engine 1, a water temperature sensor 121 that detects the water temperature of the engine (temperature of coolant) is provided.

An intake path 11 and an exhaust path 12 are connected to the combustion chamber 1a of the engine 1. An intake valve 13 is provided between the intake path 11 and the combustion chamber 1a. By opening and closing the intake valve 13, the intake path 11 is communicated with or blocked from the combustion chamber 1a. Also, an exhaust valve 14 is provided between the exhaust path 12 and the combustion chamber 1a. By opening and closing the exhaust valve 14, the exhaust path 12 is communicated with or blocked from the combustion chamber 1a.

In the intake path 11 of the engine 1, an air cleaner 107, an airflow meter 122, an intake temperature sensor 123, a throttle valve 105 and the like are disposed. Here, the throttle valve 105 adjusts the intake air amount of the engine 1. Also, in the exhaust path 12 of the engine 1, an $O_2$ sensor 126, a three-way catalyst 108 and the like are disposed. Here, the $O_2$ sensor 126 detects the oxygen concentration in exhaust gas.

The throttle valve 105 disposed in the intake path 11 of the engine 1 is driven by a throttle motor 106. The opening degree of the throttle valve 105 (throttle opening degree) is detected by a throttle opening degree sensor 125. Also, the throttle motor 106 is driven by the ECU 8.

Also, an injector (fuel injection valve) 102 is disposed in the intake path 11. Fuel (in this case, gasoline) is supplied to the injector 102 from a fuel tank by a fuel pump, and fuel is injected by the injector 102 into the intake path 11. Injected fuel is mixed with intake air and made into an air-fuel mixture, and introduced to the combustion chamber 1a of the engine 1. The air-fuel mixture (fuel and air) introduced to the combustion chamber 1a is ignited by the ignition plug 103, and undergoes combustion and explosion. As a result of the air-fuel mixture undergoing combustion and explosion in the combustion chamber 1a, the piston 1b performs reciprocating motion in the vertical direction of FIG. 2, so that the crankshaft 15 is rotated.

- Manual transmission 2 -

The manual transmission 2 shown in FIG. 1 is, for example, a manual transmission that employs a known synchromesh system (for example, five forward gears and one reverse gear). Also, the input shaft 21 of the manual transmission 2 is connected to the crankshaft 15 via the clutch 3 as shown in FIG. 1, and in the case where the clutch 3 is in the engaged state, and the manual transmission 2 transmits the driving force (driving torque) from the engine 1 to the drive shaft 41 while changing speed at the predetermined transmission gear ratio.

Also, the manual transmission 2 operates in order to realize the gear that corresponds to the shift position selected by the operation of the shift lever 51 of the shifting device 5 shown in FIG. 1. Note that the shift position selected by the shift lever 51 is detected by the shift position sensor 52.

- Configuration of engine control apparatus (ECU 8) -

Next, the configuration of the ECU 8 will be described with reference to FIG. 3. FIG. 3 is a functional configuration diagram showing an example of the engine control apparatus (ECU 8) mounted on the vehicle shown in FIG. 1. The ECU 8 includes a CPU (Central Processing Unit), a ROM (Read Only Memory), a RAM (Random Access Memory), a backup RAM and the like.

In the ROM, various control programs and the like are stored. The CPU loads various control programs stored in the ROM and executes various processes. The RAM is a memory that temporarily stores data resulting from computation with the CPU and the like. The backup RAM is a nonvolatile memory that stores that data or the like to be saved when the engine 1 is stopped.

In addition, the water temperature sensor 121, the airflow meter 122, the intake temperature sensor 123, the engine speed sensor 124, the throttle opening degree sensor 125, the $O_2$ sensor 126, a vehicle speed sensor 127 that detects the speed of a vehicle, an inclination sensor 128 that detects the angle of inclination in the length direction of the vehicle, the shift position sensor 52, the accelerator opening degree sensor 61, the clutch stroke sensor 71 (see FIG. 1), and the like are communicably connected to the ECU 8. Note that the inclination sensor 128 is configured by an acceleration sensor or the like, and detects an inclination angle $\theta$ in the length direction of the vehicle, that is, the inclination angle $\theta$ in the travel direction of the road surface on which the vehicle is traveling.

Furthermore, the injector 102, the ignitor 104 for the ignition plug 103, the throttle motor 106 of the throttle valve 105 and the like are communicably connected to the ECU 8 as control targets. Then, the ECU 8 executes various types of control of the engine 1 according to the outputs from the above-described various sensors, including fuel injection control of the injector 102, ignition timing control of the ignition plug 103, drive control of the throttle motor 106, and the like.

Next, the functional configuration of the ECU 8 of the present invention will be described with reference to FIG. 3. The ECU 8 loads and executes control programs stored in the ROM and thereby functions as a torque storage unit 81, a reference setting unit 82, a first determination unit 83, a position detection unit 84, an engagement determination unit 85, a second determination unit 86, a third determination unit 87, a fourth determination unit 88 and a control execution unit 89. Here, the torque storage unit 81, the reference setting unit 82, the first determination unit 83, the position detection unit 84, the engagement determination unit 85, the second determination unit 86, the third determination unit 87, the fourth determination unit 88 and the control execution unit 89 correspond to a part of the engine control apparatus of the present invention.

The torque storage unit 81 is a functional unit that stores an engine speed Ne and an engine torque Te associated with each other. The torque storage unit 81 is formed in the ROM as a look-up table (or a map), for example. Note that the torque storage unit 81 corresponds to a part of the reference setting unit in the claims. As described below, the engine speed Ne stored in the torque storage unit 81 is read out by the reference setting unit 82.

FIG. 4 is a graph showing an example of the relation between the engine speed and the engine torque. In FIG. 4, the horizontal axis indicates the engine speed Ne (rpm) and the vertical axis indicates the engine torque Te (N·m). As indicated by the graph G1 in FIG. 4, the relation between the engine speed Ne and the engine torque Te is represented by a curved line that is raised upward.

The functional configuration of the ECU 8 will be described with reference to FIG. 3 again. The reference setting unit 82 is a functional unit that sets a reference rotational speed N0 that is a rotational speed serving as a reference for the engine speed Ne based on a gear ratio RA of the manual transmission 2 and a vehicle speed V Here, the reference setting unit 82 corresponds to a part of the reference setting unit in the claims.

Specifically, the reference setting unit 82 sets, as the reference rotational speed N0, an engine speed Ne that is required for traveling at an appropriate vehicle speed V0 while maintaining a gear ratio RA, the appropriate vehicle speed V0 being predetermined in association with the gear ratio RA (see FIG. 4). Here, an appropriate vehicle speed V0 refers to a vehicle speed obtained, for example, in the case where the engine speed Ne (for example, 1000 rpm) is greater than the idle speed (for example, 800 rpm) when the clutch 3 is completely engaged.

More specifically, the reference setting unit 82 obtains an engine torque T0 that is required for traveling at an appropriate vehicle speed V0 while maintaining the gear ratio RA, based on the gear ratio RA, the vehicle speed V and the inclination angle θ in the length direction of the vehicle. Then, it obtains the engine speed Ne corresponding to the obtained engine torque T0 as the reference rotational speed N0 (see FIG. 4). Here, the reference setting unit 82 refers to the torque storage unit 81 and obtains the engine speed Ne corresponding to the engine torque Te.

An example of a method for calculating the reference rotational speed N0 performed by the reference setting unit 82 will be described below. First of all, driving force F (N) applied to the drive wheels 44 is expressed by the following equation (1).

$$F = i \times \eta \times Te/r \qquad (1)$$

Here, the overall gear ratio i is an integrated value of reduction gear ratios of a torque transmitted from the engine 1 to the drive wheels 44, such as the gear ratio RA of the manual transmission 2, the gear ratio of the differential gear device 42 or the like. The mechanical efficiency n is a transmission efficiency of the torque transmitted from the engine 1 to the drive wheels 44. A radius r (m) indicates the radius r of the drive wheels 44.

A total running resistance R of a vehicle is expressed by the following equation (2).

$$R = Rr + Ra + Rg + Rac \qquad (2)$$

Here, the rolling resistance Rr indicates resistance due to friction between the drive wheels 44 and the road surface. The air resistance Ra (N) is resistance that the vehicle (vehicle body) receives from air. The gradient resistance Rg (N) is resistance that occurs due to gravitational acceleration according to the inclination angle θ (inclination angle θ in the length direction of the vehicle) on the road surface. The acceleration resistance Rac (N) is resistance that occurs due to inertial force that acts when the vehicle accelerates.

The rolling resistance Rr is obtained by the following equation (3).

$$Rr = \mu \times W \qquad (3)$$

The friction coefficient μ indicates rolling resistance between the drive wheels 44 and the road surface. The total vehicle weight W (N) is a total sum of the weights of the vehicle, people in the vehicle, luggage and the like.

The air resistance Ra is obtained by the following equation (4).

$$Ra = \rho \times Cd \times A \times V/2 \qquad (4)$$

The density ρ indicates the density of atmosphere around the road surface on which the vehicle travels. The air resistance coefficient Cd is obtained by a driving test using an actual vehicle or the like. Also, the projected area A (m$^2$) is the projected frontal area of the vehicle.

Next, the gradient resistance Rg is obtained by the following equation (5) using the total vehicle weight W and

the inclination angle $\theta$ of the road surface.

$$Rg = W \times \sin\theta \qquad (5)$$

The acceleration resistance Rac is obtained by the following equation (6).

$$Rac = (1 + \sigma) \times W \times \alpha/g \qquad (6)$$

The acceleration $\alpha$ (m/s$^2$) indicates the acceleration of the vehicle, and a change in the vehicle speed V The mass coefficient $\sigma$ corresponding to rotating portions indicates inertial resistance that acts on the rotating portions such as the drive wheels 44 and the drive shaft 41 due to acceleration.

In this manner, the total running resistance R can be obtained using the equations (2) to (6). In addition, for stable traveling of the vehicle, the following equation (7) needs to be satisfied.

$$F = R \qquad (7)$$

When the equation (1) is inserted into the equation (7), and the resultant equation is solved with respect to the engine torque Te, the following equation (8) is obtained.

$$Te = r \times R/(i \times \eta) \qquad (8)$$

As described above, the reference setting unit 82 obtains the total running resistance R using the equations (2) to (6), and assigns the value of the obtained total running resistance R to the equation (8), thereby obtaining the engine torque Te as the engine torque T0 that is required for traveling at an appropriate vehicle speed V0 while maintaining the gear ratio RA. Then, the reference setting unit 82 refers to the torque storage unit 81 and obtains an engine speed Ne that corresponds to the obtained engine torque T0 as the reference rotational speed N0. Note that the vehicle speed V when the value of the total running resistance R is obtained is set to, for example, the appropriate vehicle speed V0 described above. In addition, the acceleration $\alpha$ is obtained using the following equation (9), for example.

$$\alpha = (V0 - V1)/T0 \qquad (9)$$

The vehicle speed V1 indicates the vehicle speed when the clutch 3 has reached an engagement start point from the disengaged state, and time T0 indicates a period of time required for the clutch 3 to shift from the engagement start point to the completely engaged state.

In this manner, since the engine speed Ne that is required for traveling at an appropriate vehicle speed V0 predetermined in association with a gear ratio RA while maintaining the gear ratio RA is set as the reference rotational speed N0, the reference rotational speed N0 can be set to an appropriate value.

That is, for example, by setting, as the appropriate vehicle speed V0, a vehicle speed V at which an engine speed Ne is greater (for example, 1000 rpm) than an idle speed Nid (for example, 800 rpm) when the clutch 3 is completely engaged, the reference rotational speed N0 is set to an appropriate value (in this case, 1000 rpm).

The first determination unit 83 is a functional unit that determines whether an input shaft rotational speed Ni of the manual transmission 2 is less than the reference rotational speed N0 set by the reference setting unit 82, when the clutch 3 is in the disengaged state in a travel state in which any one of the forward gears of the manual transmission 2 is in engagement. Here, the first determination unit 83 corresponds to the first determination unit in the claims.

The position detection unit 84 is a functional unit that detects a stroke St of the clutch 3 via the clutch stroke sensor 71. Here, the position detection unit 84 corresponds to a part of the position detection unit in the claims.

The engagement determination unit 85 is a functional unit that determines whether the clutch 3 has reached the engagement start point from the disengaged state based on the result of the detection performed by the position detection unit 84. Here, the engagement determination unit 85 corresponds to the engagement determination unit in the claims. Also, the "engagement start point" corresponds to a point of time in a period during which the clutch 3 is shifted from the disengaged state to the engaged state, at which transmission of the engine torque Te from the crankshaft 15 to the input shaft 21 via the clutch 3 is started (or, corresponds to the stroke St of the clutch 3 at that point of time).

In the present embodiment, a case is described in which the engagement determination unit 85 determines whether the clutch 3 has reached the engagement start point from the disengaged state based on the result of the detection performed by the position detection unit 84, but a configuration may be such that the engagement determination unit 85 determines whether the clutch 3 has reached the engagement start point from the disengaged state based on the engine speed Ne and the input shaft rotational speed Ni. In this case, the clutch stroke sensor 71 is not necessary, and thus the configuration of the engine control apparatus can be simplified.

The second determination unit 86 is a functional unit that determines, in the case where the engagement determination unit 85 has determined that the engagement start point has been reached, whether the engine speed Ne is less than the reference rotational speed N0 set by the reference setting unit 82. Here, the second determination unit 86 corresponds to the second determination unit in the claims.

The third determination unit 87 is a functional unit that determines whether the clutch 3 is in the completely engaged state. Here, the third determination unit 87 corresponds to the third determination unit in the claims. Also, the "completely engaged state" corresponds to a point of time at which the clutch 3 has completely shifted to the engaged state from the disengaged state (or, corresponds to the stroke St of the clutch 3 at that point of time). In addition, since the clutch 3 does not slip at all in this state, the input shaft rotational speed Ni and the engine speed Ne have the same value.

Specifically, the third determination unit 87 determines that the clutch 3 has reached the completely engaged state when the input shaft rotational speed Ni of the manual transmission 2 has reached the reference rotational speed N0 after the engagement determination unit 85 has determined that the engagement start point has been reached.

In this manner, it is determined that the clutch 3 has reached the completely engaged state when the input shaft rotational speed Ni of the manual transmission 2 has reached the reference rotational speed N0 after it has been determined that the engagement start point has been reached, and thus the determination on the completely engaged state can be correctly made with a simple configuration.

In the present embodiment, a case is described in which the third determination unit 87 determines that the clutch 3 has reached the completely engaged state when the input shaft rotational speed Ni has reached the reference rotational speed N0. However, a configuration may be adopted in which the third determination unit 87 determines whether the clutch 3 is in the completely engaged state by another method. For example, a configuration may be adopted in which the third determination unit 87 determines whether the clutch 3 is in the completely engaged state based on the stroke St of the clutch 3 detected by the position detection unit 84.

The fourth determination unit 88 is a functional unit that determines whether the engine speed Ne obtained when the clutch 3 is in the disengaged state is greater than or equal to the reference rotational speed N0 set by the reference setting unit 82. Here, the fourth determination unit 88 corresponds to the fourth determination unit in the claims.

The control execution unit 89 controls engine output based on the reference rotational speed N0 in the case where the first determination unit 83 has determined that the input shaft rotational speed Ni of the manual transmission 2 is less than the reference rotational speed N0. Here, the "engine output" refers to energy output from the engine 1, and it is controlled by, for example, either controlling the fuel injection amount via the injector 102, or controlling the throttle opening degree via the throttle motor 106, or both. That is, the engine output can be increased by increasing either the fuel injection amount or the throttle opening degree, or both.

Specifically, the control execution unit 89 executes control for increasing the engine output based on the reference rotational speed N0, in the case where the second determination unit 86 has determined that the engine speed Ne is less than the reference rotational speed N0 when it has been determined that the clutch 3 has reached the engagement start point. More specifically, the control execution unit 89 executes control for increasing the engine output such that the engine speed Ne matches the reference rotational speed N0, in the case where the second determination unit 86 has determined that the engine speed Ne is less than the reference rotational speed N0 when it has been determined that the clutch 3 has reached the engagement start point. Also, the control execution unit 89 continues execution of control for continuously increasing the engine output such that the engine speed Ne matches the reference rotational speed N0, until the third determination unit 87 determines that the clutch 3 is in the completely engaged state.

Specifically, the control execution unit 89 controls the engine output such that the engine speed Ne matches the reference rotational speed N0 (in this case, increases the engine output), in the case where the first determination unit 83 determines that the input shaft rotational speed Ni of the manual transmission 2 obtained when the clutch 3 is in the disengaged state is less than the reference rotational speed N0, and also the second determination unit 86 determines that the engine speed Ne is less than the reference rotational speed N0 when it has been determined that the clutch 3 has reached the engagement start point. The control execution unit 89 continues to control the engine output such that the engine speed Ne matches the reference rotational speed N0 until the third determination unit 87 determines that the clutch 3 is in the completely engaged state (see FIGS. 7 and 9).

The above-described processing that is performed by the control execution unit 89 in the case where the first determination unit 83 determines that the input shaft rotational speed Ni of the manual transmission 2 obtained when the clutch 3 is in the disengaged state is less than the reference rotational speed N0, and also the second determination unit 86 determines that the engine speed Ne is less than the reference rotational speed N0 when it has been determined that the clutch 3 has reached the engagement start point will be referred to as "output control processing A" in the following description.

In addition, the control execution unit 89 executes control for decreasing the engine output such that the engine speed Ne matches the reference rotational speed N0, in the case where the fourth determination unit 88 determines that the engine speed Ne obtained when the clutch 3 is in the disengaged state is greater than or equal to the reference rotational speed N0. Furthermore, the control execution unit 89 continues execution of control for decreasing the engine output such that the engine speed Ne matches the reference rotational speed N0, until the engagement determination unit 85 determines that the engagement start point has been reached.

Specifically, the control execution unit 89 controls the engine output such that the engine speed Ne matches the reference rotational speed N0 (in this case, decreases the engine output), in the case where the first determination unit 83 determines that the input shaft rotational speed Ni of the manual transmission 2 is less than the reference rotational speed N0 when the clutch 3 is in the disengaged state, and also the fourth determination unit 88 determines that the engine speed Ne is greater than or equal to the reference rotational speed N0, and continues to control the engine output such that the engine speed Ne matches the reference rotational speed N0 until the engagement determination unit 85 determines that engagement start point has been reached (see FIGS. 8 and 10).

The above-described processing that is performed by the control execution unit 89 in the case where the first determination unit 83 determines that the input shaft rotational speed Ni of the manual transmission 2 is less than the reference rotational speed N0 when the clutch 3 is in the disengaged state, and also the fourth determination unit 88 determines that the engine speed Ne is greater than or equal to the reference rotational speed N0 will be referred to as "output control processing B" in the following description.

Note that when the "output control processing A" or the "output control processing B" performed by the control execution unit 89 has ended, the control of the engine 1 returns to normal control.

- Operation of engine control apparatus (ECU 8) -

Next, with reference to FIG. 5, the operation of the engine control apparatus (mainly ECU 8) of the present invention will be described. FIG. 5 is a flowchart illustrating an example the operation performed by the engine control apparatus (mainly ECU 8) shown in FIG. 3. First, in step S101, the first determination unit 83 determines whether the vehicle speed V is greater than "0" (whether a vehicle is traveling forward). If the determination result is "YES" in step S101, the processing advances to step S103. If the determination result is "NO" in step S101, the processing returns to step S101, and processing in step S101 onward is repeated.

In step S103, the first determination unit 83 determines whether any one of the forward gears of the manual transmission 2 is in engagement (that is, any gear other than the neutral gear "N" and the reverse gear "R" is in engagement). If the determination result is "YES" in step S103, the processing advances to step S105. If the determination result is "NO" in step S103, the processing returns to step S101, and processing in step S101 onward is repeated.

In step S105, the first determination unit 83 determines whether the clutch 3 is in the disengaged state. If the determination result is "YES" in step S105, the processing advances to step S107. If the determination result is "NO" in step S105, the processing returns to step S101, and processing in step S101 onward is repeated.

In step S107, the reference setting unit 82 executes "reference rotational speed setting processing", which is processing for setting the reference rotational speed N0. Then, in step S109, the first determination unit 83 determines whether the input shaft rotational speed Ni is less than the reference rotational speed N0 set in step S107. If the determination result is "YES" in step S109, the processing advances to step S111. If the determination result is "NO" in step S109, the processing returns to step S101, and processing in step S101 onward is repeated.

In step S111, the fourth determination unit 88 determines whether the engine speed Ne is less than the reference rotational speed N0 set in step S107. If the determination result is "YES" in step S111, the processing advances to step S113. If the determination result is "NO" in step S111, the processing advances to step S117.

In step S113, the second determination unit 86 determines whether the clutch 3 has reached the engagement start point. If the determination result is "YES" in step S113, the processing advances to step S115. If the determination result is "NO" in step S113, the processing returns to step S107, and processing in step S107 onward is repeated.

In step S115, the control execution unit 89 performs the "output control processing A", which is processing for increasing the output of the engine 1. Note that the "output control processing A" will be described in detail with reference to the flowchart shown in FIG. 7. When the processing in step S115 ends, in step S121, control is returned to the normal engine control. Next, the processing is returned to step S101, and processing in step S101 onward is repeated.

In step S117, the control execution unit 89 performs the "output control processing B", which is processing for decreasing the output of the engine 1. Note that the "output control processing B" will be described in detail with reference to the flowchart shown in FIG. 8. When the processing in step S117 ends, in step S119, the engagement determination unit 85 determines whether the clutch 3 has reached the engagement start point. If the determination result is "NO" in step S119, the processing returns to step S107, and processing in step S107 onward is repeated. If the determination result is "YES" in step S119, in step S121, control is returned to normal engine control. Next, the processing is returned to step S101, and processing in step S101 onward is repeated.

In this manner, the engine output is controlled based on the reference rotational speed N0 in the case where it is determined that the input shaft rotational speed Ni of the manual transmission 2 obtained when the clutch 3 is in the disengaged state is less than the reference rotational speed N0. Therefore, for example, by controlling the engine output such that the engine speed Ne matches the reference rotational speed N0 when the clutch 3 has reached the engagement start point from the disengaged state, the engine 1 can be prevented from stalling at the time of clutch engagement.

In the present embodiment, a case is described in which in the case where it is determined that the input shaft rotational speed Ni is less than the reference rotational speed N0, the control execution unit 89 controls the engine output such that the engine speed Ne matches the reference rotational speed N0. However, any configuration may be adopted as long as the control execution unit 89 controls the engine output based on the reference rotational speed N0 when it is determined that the input shaft rotational speed Ni is less than the reference rotational speed N0.

For example, a configuration may be adopted in which the control execution unit 89 controls the engine output such that the difference between the engine speed Ne and the reference rotational speed N0 is less than or equal to a predetermined rotational speed difference $\Delta Ne2$ (for example, 100rmp). In this case, the engine output may be controlled such that the engine speed Ne is in the range from (reference rotational speed N0 - rotational speed difference $\Delta Ne2$) and to (reference rotational speed N0 + rotational speed difference $\Delta Ne2$) (so-called band control may be performed), and thus the engine output can be controlled easily.

Also, in the case where it is determined that the clutch 3 has reached the engagement start point, whether the engine speed Ne is less than the reference rotational speed N0 is determined. If it is determined that the engine speed Ne is less than the reference rotational speed N0, the engine output is controlled based on the reference rotational speed N0, and thus the engine 1 can be reliably prevented from stalling at the time of clutch engagement.

That is, in the case where it is determined that the clutch 3 has reached the engagement start point from the disengaged state, the engine output is controlled based on the reference rotational speed N0. Therefore, for example, the engine 1 can be prevented from stalling at the time of clutch engagement by increasing the engine output such that the engine speed Ne matches the reference rotational speed N0.

- Reference rotational speed setting processing -

Next, reference rotational speed setting processing executed in step S107 of the flowchart shown in FIG. 5 will be described in detail, with reference to FIG. 6. FIG. 6 is a detailed flowchart illustrating an example of the reference rotational speed setting processing executed in step S107 of the flowchart shown in FIG. 5. Note that the following processes are all executed by the reference setting unit 82 (see FIG. 3). First, in step S201, an inclination angle (inclination angle of the road surface) $\theta$ in the length direction of the vehicle is detected via the inclination sensor 128.

Next, in step S203, based on the inclination angle $\theta$ in the length direction of the vehicle detected in step S201 or the like, the total running resistance R is obtained using the above-described equations (2) to (6). Then, the value of the total running resistance R obtained in step S203 is assigned in the above-described equation (8), thereby obtaining the engine torque T0. Next, in step S207, the engine speed Ne corresponding to the engine torque T0 obtained in step S205 is obtained as the reference rotational speed N0 by referring to the torque storage unit 81. Then, processing is returned to step S109 of the flowchart shown in FIG. 5.

In this manner, based on the gear ratio RA, the vehicle speed V and the inclination angle $\theta$ in the length direction of the vehicle, the engine torque T0 that is required for traveling at an appropriate vehicle speed V0 while maintaining a gear ratio RA is obtained, and the engine speed Ne corresponding to the obtained engine torque T0 is obtained as the reference rotational speed N0. Therefore, the reference rotational speed N0 can be set to an appropriate value.

Specifically, since the engine torque T0 is obtained based on the inclination angle $\theta$ in the length direction of the vehicle (see the above-described equations (2), (5) and (8)), for example, the larger the upward inclination (or the smaller the downward inclination), the larger the value obtained as the engine torque T0, so that a larger value is obtained as the reference rotational speed N0. Therefore, the reference rotational speed N0 can be set to an appropriate value.

In the present embodiment, a case is described in which the reference setting unit 82 obtains the engine torque T0 based on the gear ratio RA, the vehicle speed V and the inclination angle $\theta$ in the length direction of the vehicle, and the reference rotational speed N0 corresponding to the obtained engine torque T0 is set. However, a configuration may be adopted in which the reference setting unit 82 sets the reference rotational speed N0 using another method.

For example, a configuration may be adopted in which the reference setting unit 82 sets, as the reference rotational speed N0, a rotational speed obtained by adding a predetermined positive rotational speed ΔNe1 to the idle speed Nid of the engine 1. In this case, since the rotational speed (in this case, 1000 rpm) obtained by adding the predetermined positive rotational speed ΔNe1 (for example, 200 rpm) to the idle speed Nid of the engine 1 (for example, 800 rpm) is set as the reference rotational speed N0, the reference rotational speed N0 can be set to an appropriate value (in this case, 1000 rpm) by a simple configuration.

- Output control processing A -

Next, output control processing A executed in step S115 of the flowchart shown in FIG. 5 will be described in detail, with reference to FIG. 7. FIG. 7 is a detailed flowchart illustrating an example of the output control processing A executed in step S115 of the flowchart shown in FIG. 5. First, in step S301, the output of the engine 1 is increased by the control execution unit 89. Note that the output of the engine 1 is increased by either increasing the fuel injection amount via the injector 102, or increasing the throttle opening degree via the throttle motor 106, or both.

Next, in step S303, the control execution unit 89 determines whether the engine speed Ne is greater than or equal to the reference rotational speed N0. If the determination result is "NO" in step S303, the processing is returned to step S301, and processing in step S301 onward is repeated. If the determination result is "YES" in step S303, the processing advances to step S305.

In step S305, the control execution unit 89 maintains the engine speed Ne at the reference rotational speed N0. Then, in step S307, the third determination unit 87 determines whether the input shaft rotational speed Ni is greater than or equal to the reference rotational speed N0 (whether the clutch 3 is in the completely engaged state). If the determination result is "NO" in step S307, the processing returns to step S305, and processing in step S305 onward is repeated. If the determination result is "YES" in step S307, the processing is returned to step S121 in FIG. 5.

In this manner, in the case where it is determined that the engine speed Ne is less than the reference rotational speed N0, the engine output is controlled such that the engine speed Ne matches the reference rotational speed N0, and thus the engine output is increased. Therefore, the engine 1 can be further reliably prevented from stalling at the time of clutch engagement.

In the present embodiment, a case is described in which in the case where it is determined that the engine speed Ne is less than the reference rotational speed N0, the control execution unit 89 increases the engine output such that the engine speed Ne matches the reference rotational speed N0. However, any configuration may be adopted as long as the control execution unit 89 controls the engine output based on the reference rotational speed N0 when it is determined that the engine speed Ne is less than the reference rotational speed N0.

For example, a configuration may be adopted in which the control execution unit 89 controls the engine output such that the difference between the engine speed Ne and the reference rotational speed N0 is less than or equal to a predetermined rotational speed difference ΔNe2 (for example, 100 rpm). In this case, it is sufficient if the engine output is controlled such that the engine speed Ne is greater than or equal to (reference rotational speed N0 - rotational speed difference ΔNe2) and less than or equal to (reference rotational speed N0 + rotational speed difference ΔNe2) (so-called band control may be performed), and thus the engine output can be controlled easily.

Also, control of the engine output is continued such that the engine speed Ne matches the reference rotational speed N0, until it is determined that the clutch 3 is in the completely engaged state. Therefore, the engine 1 can be further reliably prevented from stalling at the time of clutch engagement.

That is, since control of the engine output is continued such that the engine speed Ne matches the reference rotational speed N0 from when it is determined that the clutch 3 has reached the engagement start point from the disengaged state until the clutch 3 reaches the completely engaged state, the control for increasing the engine output is continued. Therefore, the engine 1 can be further reliably prevented from stalling at the time of clutch engagement.

In the present embodiment, a case is described in which the control execution unit 89 increases the engine output such that the engine speed Ne matches the reference rotational speed N0, from when it is determined that the clutch 3 has reached the engagement start point from the disengaged state until the clutch 3 reaches the completely engaged state. However, any configuration may be adopted as long as the control execution unit 89 continues control for increasing the engine output from when it is determined that the clutch 3 has reached the engagement start point from the disengaged state until the clutch 3 reaches the completely engaged state.

For example, a configuration may be adopted in which from when it is determined that the clutch 3 has reached the engagement start point from the disengaged state until the clutch 3 reaches the completely engaged state, the control execution unit 89 continues control for increasing the engine output such that the difference between the engine speed Ne and the reference rotational speed N0 is less than or equal to a predetermined rotational speed difference ΔNe2 (for example, 100 rpm). In this case, it is sufficient that control of the engine output is continued such that the engine speed Ne is greater than or equal to (reference rotational speed N0-rotational speed difference ΔNe2) and less than or equal to (reference rotational speed N0 + rotational speed difference ΔNe2) (so-called band control may be performed), and thus the engine output can be controlled easily.

- Output control processing B -

Next, output control processing B executed in step S117 of the flowchart shown in FIG. 5 will be described in detail, with reference to FIG. 8. FIG. 8 is a detailed flowchart illustrating an example of the output control processing B executed in step S117 of the flowchart shown in FIG. 5. Note that the following processes are all executed by the control execution unit 89.

First, in step S401, the output of the engine 1 is decreased. Note that the output of the engine 1 is decreased by either decreasing the fuel injection amount via the injector 102, or decreasing the throttle opening degree via the throttle motor 106, or both. Next, in step S403, whether the engine speed Ne is less than or equal to the reference rotational speed N0 is determined. If the determination result is "NO" in step S403, the processing returns to step S401, and processing in step S401 onward is repeated. If the determination result is "YES" in step S403, the processing advances to step S405. In step S405, the engine speed Ne is maintained at the reference rotational speed N0. Then, the processing is returned to step S119 of the flowchart shown in FIG. 5.

In this manner, whether the engine speed Ne obtained when the clutch 3 is in the disengaged state is greater than or equal to the reference rotational speed N0 is determined, and in the case where it is determined that the engine speed Ne is greater than or equal to the reference rotational speed N0, control for decreasing the engine output such that the engine speed Ne matches the reference rotational speed N0 is executed. Therefore, deterioration of fuel efficiency of the vehicle at the time of clutch engagement can be prevented.

In the present embodiment, a case is described in which in the case where the engine speed Ne is greater than or equal to the reference rotational speed N0, the control execution unit 89 executes control for decreasing the engine output such that the engine speed Ne matches the reference rotational speed N0. However, any configuration may be adopted as long as the control execution unit 89 controls the engine output based on the reference rotational speed N0 when the engine speed Ne is greater than or equal to the reference rotational speed N0.

For example, a configuration may be adopted in which in the case where the engine speed Ne is greater than or equal to the reference rotational speed N0, the control execution unit 89 performs control for decreasing the engine output such that the engine speed Ne is, for example, greater than or equal to (reference rotational speed N0 - rotational speed difference ΔNe2) and less than or equal to the reference rotational speed N0. In this case, it is sufficient that the control execution unit 89 performs so-called band control, and thus the engine output can be controlled easily.

Also, control for decreasing the engine output is continued such that the engine speed Ne matches the reference rotational speed N0, until it is determined that the engagement start point has been reached (until the determination result is "YES" in step S119 of the flowchart shown in FIG.5). Therefore, deterioration of fuel efficiency of the vehicle at the time of clutch engagement can be further reliably prevented.

In the present embodiment, a case is described in which the control execution unit 89 executes control for decreasing the engine output such that the engine speed Ne matches the reference rotational speed N0, until it is determined that the engagement start point has been reached. However, any configuration may be adopted in which the control execution unit 89 continues control of the engine output based on the reference rotational speed N0 until it is determined that the engagement start point has been reached.

For example, a configuration may be adopted in which the control execution unit 89 continues execution of control for decreasing the engine output such that the engine speed Ne is, for example, greater than or equal to (reference rotational speed N0 - rotational speed difference ΔNe2) and less than or equal to the speed N0, until it is determined that the engagement start point has been reached. In this case, it is sufficient that the control execution unit 89 performs so-called band control, and thus the engine output can be controlled easily.

- Timing chart (output control processing A) -

Next, examples of timing charts of the output control processing A and the output control processing B will be described with reference to FIGS. 9 and 10. FIG. 9 is a timing chart illustrating an example of an operation performed by the engine control apparatus shown in FIG. 3 (mainly, the output control processing A). First, an example of the timing chart of the output control processing A is described with reference to FIG. 9. In four graphs G11 to G14 shown in FIG. 9, the horizontal axes of the graphs indicate time t, and the vertical axes of the respective graphs indicate the engine speed Ne, the input shaft rotational speed Ni, the accelerator opening degree and the clutch stroke.

In the initial state, the engine speed Ne and the input shaft rotational speed Ni are greater than the reference rotational speed N0, and the accelerator opening degree and the clutch stroke are both in an "ON" state. Here, a state in which the accelerator opening degree is in the "ON" state refers to a state in which the accelerator pedal 6 shown in FIG. 1 is depressed. Also, a state in which the accelerator opening degree is in an "OFF" state refers to a state in which the accelerator pedal 6 shown in FIG. 1 is not depressed. In addition, a state in which the clutch stroke is in the "ON" state refers to a state in which the clutch pedal 7 shown in FIG. 1 is not depressed, and the clutch 3 is engaged. Also, a state in which the clutch stroke is in the "OFF" state refers to a state in which the clutch pedal 7 shown in FIG. 1 is depressed so that the clutch 3 is disengaged.

At time T11, as shown in the graph G13, the accelerator opening degree starts decreasing, and at time T12, the accelerator opening degree is in the OFF state. Along with this, as shown in the graphs G11 and G12, the engine speed Ne and the input shaft rotational speed Ni also decrease. Then, at time T13, the engine speed Ne and the input shaft rotational speed Ni reach the idle speed Nid (for example, 800 rpm).

At time T14, as shown in the graph G14, the clutch stroke starts decreasing, and at time T15, the clutch stroke is in the OFF state. Along with this operation for shifting the clutch 3 from the engaged state to the disengaged state, the engine 1 and the manual transmission 2 are disconnected from each other, and thereby the load applied from the manual transmission 2 to the engine 1 is reduced. Therefore, as shown in the graph G11, the engine speed Ne is temporarily increased, and thereafter returns to the idle speed Nid. Also, from time T14 onward, since the driving force from the engine 1 is not transmitted to the drive wheels 44, the input shaft rotational speed Ni monotonically decreases.

At time T16, as shown in graph G14, the clutch stroke starts increasing, and at time T18, the clutch stroke is in the ON state. At time T17 between time T16 and time T18, the clutch 3 reaches the engagement start point. At time T17, the input shaft rotational speed Ni is less than the reference rotational speed N0, and the engine speed Ne is less than the reference rotational speed N0. Therefore, as shown in the graph G11, the engine output is increased such that the engine speed Ne matches the reference rotational speed N0, and control for increasing the engine output is continued until time T18, when the clutch 3 reaches the completely engaged state.

Also, at time T17, engagement of the clutch 3 is started, and the clutch 3 reaches the completely engaged state at T18. Therefore, as shown in the graph G12, the input shaft rotational speed Ni monotonically increases during a period from time T17 to time T18, and at time T18, the input shaft rotational speed Ni is matched to the reference rotational speed N0.

The input shaft rotational speed Ni matches the reference rotational speed N0 at time T18, and thus from time T18 onward, control is shifted to normal control. As a result, as shown in the graph G11, the engine speed Ne approaches the idle speed Nid. Along with this, as shown in the graph G12, the input shaft rotational speed Ni also approaches the idle speed Nid.

In this manner, at time T17 when the clutch 3 reaches the engagement start point, the engine speed Ne is determined to be less than the reference rotational speed N0, and the engine output is controlled such that the engine speed Ne matches the reference rotational speed N0. As a result, the engine output is increased, and the engine 1 can be prevented from stalling at the time of clutch engagement.

- Timing chart (output control processing B) -

Next, an example of the timing chart of the output control processing B will be described with reference to FIG 10. In five graphs G20 to G24 shown in FIG. 10, the horizontal axes of the graphs indicate time t, and the vertical axes of the respective graphs indicate the engine fuel injection amount, the engine speed Ne, the input shaft rotational speed Ni, the accelerator opening degree, and the clutch stroke. In the initial state, the engine speed Ne and the input shaft rotational speed Ni are greater than the reference rotational speed N0, and the accelerator opening degree and the clutch stroke are both in the "ON" state.

At time T21, as shown in the graph G23, the accelerator opening degree starts decreasing, and at time T22, the accelerator opening degree is in the OFF state. Along with this, as shown in the graphs G21 and G22, the engine speed Ne and the input shaft rotational speed Ni decrease. Then, at time T23, the engine speed Ne and the input shaft rotational speed Ni reaches the idle speed Nid (for example, 800 rpm).

At time T24, as shown in the graph G24, the clutch stroke starts decreasing, and at time T25, the clutch stroke is in the OFF state. Along with this operation for shifting the clutch 3 from the engaged state to the disengaged state, the load applied to the engine 1 is reduced. Therefore, as shown in the graph G21, the engine speed Ne temporarily increases and thereafter, returns to the idle speed Nid. Also, from time T24 onward, the driving force from the engine 1 is not transmitted to the drive wheels 44, and thus the input shaft rotational speed Ni monotonically decreases.

At time T26, as shown in the graph G23, the accelerator opening degree monotonically increases. Along with this, as shown in the graphs G21 and G22, the engine fuel injection amount and the engine speed Ne monotonically increase, and at time T27, the engine speed Ne reaches the reference rotational speed N0. At time T27, the clutch 3 is in the disengaged state, the input shaft rotational speed Ni is less than the reference rotational speed N0, and the engine speed Ne is greater than or equal to the reference rotational speed N0. Therefore, as shown in the graphs G20 and G21, the engine output is decreased such that the engine speed Ne matches the reference rotational speed N0, and the control for decreasing the engine output is continued until time T28, when the clutch 3 reaches the engagement start state.

Also, at time T27, the clutch stroke start increasing and at time T29, the clutch stroke is in the ON state. The clutch 3 reaches the engagement start point at time T28 between time T27 and time T29. At time T28, the clutch 3 reaches the engagement start point, and thus the control for decreasing the engine output is ended and shifted to normal control. Accordingly, as shown in the graph G21, the engine speed Ne first increases stepwise, and then in a substantially constant inclination.

Furthermore, at time T28, the clutch 3 reaches the engagement start point and the engine speed Ne is maintained at the reference rotational speed N0 as shown in the graph G21, and thus the input shaft rotational speed Ni increases in a substantially constant inclination as shown in the graph G22. Also, at time T29, the clutch 3 reaches the completely engaged state, and thus the input shaft rotational speed Ni increases in a larger inclination as shown in the graph G22.

In this manner, since the engine speed Ne reaches the reference rotational speed N0 at time T27 when the clutch 3 is in the disenga[1]ged state, the engine output is decreased such that the engine speed Ne matches the reference rotational speed N0. Therefore, deterioration of fuel efficiency of the vehicle at the time of clutch engagement can be prevented. The graph G30 shown in FIG. 10 shows an engine fuel injection amount in the case where the output control processing B is not performed. By performing the output control processing B, fuel consumption corresponding to the hatched region ∆F can be reduced.

- Other embodiments -

In the foregoing embodiments, a case is described in which the ECU 8 functions as the torque storage unit 81, the reference setting unit 82, the first determination unit 83, the position detection unit 84, the engagement determination unit 85, the second determination unit 86, the third determination unit 87, the fourth determination unit 88 and the control execution unit 89. However, at least any one of the torque storage unit 81, the reference setting unit 82, the first determination unit 83, the position detection unit 84, the engagement determination unit 85, the second determination unit 86, the third determination unit 87, the fourth determination unit 88 and the control execution unit 89 may be configured by hardware such as an electronic circuit.

In the foregoing embodiments, a case is described in which the shift position selected by the shift lever 51 is detected by the shift position sensor 52. However, the shift position selected by the shift lever 51 may be estimated based on the input shaft rotational speed Ni and the rotational speed of the axles 43. In this case, the shift position sensor 52 need not be provided.

[Industrial Applicability]

The present invention can be used for an engine control apparatus that, in a vehicle on which an engine, a manual transmission and a clutch that is provided between the engine and the manual transmission and is configured to be capable of switching a disengaged state and an engaged state are mounted, controls the speed of the engine when the clutch is shifted from the disengaged state to the engaged state in a travel state in which any one of the forward gears of the manual transmission is in engagement.

[Reference Signs List]

| | |
|---|---|
| 1 | Engine |
| 102 | Injector |
| 104 | Ignitor |
| 105 | Throttle valve |
| 106 | Throttle motor |
| 124 | Engine speed sensor |
| 125 | Throttle opening degree sensor |
| 127 | Vehicle speed sensor |
| 128 | Inclination sensor |
| 2 | Manual transmission |
| 3 | Clutch |
| 5 | Shifting device |
| 52 | Shift position sensor |
| 6 | Accelerator pedal |
| 61 | Accelerator opening degree sensor |

| 7 | Clutch pedal |
|---|---|
| 71 | Clutch stroke sensor (part of position detection unit) |
| 8 | ECU (engine control apparatus) |
| 81 | Torque storage unit (part of reference setting unit) |
| 82 | Reference setting unit (part of reference setting unit) |
| 83 | First determination unit (first determination unit) |
| 84 | Position detection unit (part of position detection unit) |
| 85 | Engagement determination unit (engagement determination unit) |
| 86 | Second determination unit (second determination unit) |
| 87 | Third determination unit (third determination unit) |
| 88 | Fourth determination unit (fourth determination unit) |
| 89 | Control execution unit (control execution unit) |

**Claims**

1. An engine control apparatus that, in a vehicle on which an engine, a manual transmission and a clutch that is provided between the engine and the manual transmission and is capable of switching a disengaged state and an engaged state are mounted, controls the speed of the engine when the clutch is shifted from the disengaged state to the engaged state in a travel state in which any one of forward gears of the manual transmission is in engagement, the engine control apparatus comprising:

   reference setting unit that sets a reference rotational speed that is a rotational speed serving as a reference for an engine speed, based on a gear ratio of the manual transmission and a vehicle speed;
   first determination unit that determines whether an input shaft rotational speed of the manual transmission obtained when the clutch is in the disengaged state is less than the reference rotational speed set by the reference setting unit; and
   control execution unit that controls an engine output based on the reference rotational speed in a case where the first determination unit has determined that the input shaft rotational speed of the manual transmission is less than the reference rotational speed.

2. The engine control apparatus according to claim 1, further comprising:

   position detection unit that detects a stroke of the clutch;
   engagement determination unit that determines whether the clutch has reached an engagement start point from the disengaged state based on a result of detection performed by the position detection unit; and
   second determination unit that determines whether the engine speed is less than the reference rotational speed in a case where the engagement determination unit has determined that the engagement start point has been reached,
   wherein the control execution unit controls the engine output based on the reference rotational speed in a case where the second determination unit has determined that the engine speed is less than the reference rotational speed.

3. The engine control apparatus according to claim 2, wherein the control execution unit controls the engine output such that the engine speed matches the reference rotational speed in the case where the second determination unit has determined that the engine speed is less than the reference rotational speed.

4. The engine control apparatus according to claim 3, further comprising third determination unit that determines whether the clutch is in a completely engaged state, wherein the control execution unit continues control of the engine output such that the engine speed matches the reference rotational speed, until the third determination unit determines that the clutch is in the completely engaged state.

5. The engine control apparatus according to claim 4, wherein the third determination unit determines that the clutch is in the completely engaged state when the input shaft rotational speed of the manual transmission has reached the reference rotational speed after the engagement determination unit has determined that the engagement start point has been reached.

6. The engine control apparatus according to any one of claims 1 to 5, further comprising fourth determination unit that determines whether an engine speed obtained when the clutch is in the disengaged state is greater than or equal to the reference rotational speed set by the reference setting unit,
wherein the control execution unit controls the engine output such that the engine speed matches the reference rotational speed in a case where the fourth determination unit has determined that the engine speed is greater than or equal to the reference rotational speed.

7. The engine control apparatus according to claim 6, further comprising:

   position detection unit that detects a stroke of the clutch; and
   engagement determination unit that determines whether the clutch has reached the engagement start point from the disengaged state based on a result of detection performed by the position detection unit,
   wherein the control execution unit continues control of the engine output such that the engine speed matches the reference rotational speed, until the engagement determination unit determines that the engagement start point has been reached.

8. The engine control apparatus according to any of claims 1 to 7, wherein the reference setting unit sets, as the reference rotational speed, an engine speed that is necessary for traveling at an appropriate vehicle speed predetermined in association with a gear ratio, while maintaining the gear ratio.

9. The engine control apparatus according to 8, wherein the reference setting unit sets, as the reference rotational speed, a rotational speed that is obtained by adding a predetermined positive rotational speed to an idle speed of the engine.

10. The engine control apparatus according to 8, wherein the reference setting unit obtains, based on a gear ratio, a vehicle speed and an inclination angle of a vehicle length direction, an engine torque that is necessary for traveling at an appropriate vehicle speed while maintaining the gear ratio, and obtains an engine speed corresponding to the obtained engine torque as the reference rotational speed.

FIG.1

FIG.2

FIG.3

| | | 8 |
| --- | --- | --- |

| 121 | Water Temperature Sensor |
| 122 | Airflow Meter |
| 123 | Intake Temperature Sensor |
| 124 | Engine Speed Sensor |
| 125 | Throttle Opening Degree Sensor |
| 126 | O₂ Sensor |
| 127 | Vehicle Speed Sensor |
| 128 | Inclination Sensor |
| 52 | Shift Position Sensor |
| 61 | Accelerator Opening Degree Sensor |
| 71 | Clutch Stroke Sensor |

ECU

82 — Reference Setting Unit
81 — Torque Storage Unit
83 — First Determination Unit
84 — Position Detection Unit
86 — Second Determination Unit
85 — Engagement Determination Unit
87 — Third Determination Unit
89 — Control Execution Unit
88 — Fourth Determination Unit

| 102 | Injector |
| 104 | Ignitor (ignition plug) |
| 106 | Throttle Motor |

FIG.4

**FIG.5**

Start

S101
Vehicle speed V > 0?
N → Return
Y

S103
Gear ≠ "N" or "R"?
N → Return
Y

S105
Is clutch in disengaged state?
N → Return
Y

① →

S107
Reference rotational speed setting processing

S109
Input shaft rotational speed Ni < N0?
N → Return
Y

S111
Engine speed Ne < N0?
N → Output control processing B (S117)
Y

S113
Has clutch reached engagement start point?
N → ①
Y

S115
Output control processing A

S117
Output control processing B

S119
Has clutch reached engagement start point?
N → ①
Y

S121
To normal engine control

Return

# FIG.6

```
      ┌─────────────────────────┐
      │  Reference rotational   │
      │ speed setting processing │
      └─────────────────────────┘
                  │
                  ▼                          ⌐S201
┌─────────────────────────────────────────────┐
│ Inclination angle of the road surface θ is detected │
└─────────────────────────────────────────────┘
                  │
                  ▼                          ⌐S203
┌─────────────────────────────────────────────┐
│        Total running resistance R is obtained        │
└─────────────────────────────────────────────┘
                  │
                  ▼                          ⌐S205
┌─────────────────────────────────────────────┐
│        Necessary engine torque T0 is obtained        │
└─────────────────────────────────────────────┘
                  │
                  ▼                          ⌐S207
┌─────────────────────────────────────────────┐
│     Reference rotational speed N0 is obtained     │
└─────────────────────────────────────────────┘
                  │
                  ▼
            ┌─────────────┐
            │   Return    │
            └─────────────┘
```

# FIG.7

```
      ┌──────────────────────────────┐
      │  Output control processing A  │
      └──────────────────────────────┘
                    │
                    ▼  ←──────────────────────┐
                              S301            │
      ┌──────────────────────────────┐        │
      │     Increase engine output    │        │
      └──────────────────────────────┘        │
                    │                          │
                    ▼             S303      N  │
              ╱────────────╲ ─────────────────┘
              ╲   Ne ≧ N0?  ╱
                    │
                    │ Y
                    ▼  ←──────────────────────┐
                              S305            │
      ┌──────────────────────────────┐        │
      │   Maintain engine speed Ne at N0│      │
      └──────────────────────────────┘        │
                    │                          │
                    ▼             S307      N  │
              ╱────────────╲ ─────────────────┘
              ╲   Ni ≧ N0?  ╱
                    │
                    │ Y
                    ▼
            ┌──────────────┐
            │    リターン    │
            └──────────────┘
```

FIG.8

```
        ( Output control processing B )
                      │
                      │        ╭S401
                      ▼
        ┌─────────────────────────────┐
        │   Decrease engine output    │
        └─────────────────────────────┘
                      │        ╭S403
                      ▼                    N
        ╱─────────────────────────╲ ─────────┐
        ╲       Ne≦N0?            ╱           │
         ╲───────────────────────╱            │
                      │ Y                      │
                      │        ╭S405           │
                      ▼                        │
        ┌─────────────────────────────┐        │
        │  Maintain engine speed Ne at N0 │    │
        └─────────────────────────────┘        │
                      │                        │
                      ▼                        │
              ( Return )                       │
```

FIG.9

## FIG.10

## INTERNATIONAL SEARCH REPORT

| | International application No. |
|---|---|
| | PCT/JP2011/059741 |

**A. CLASSIFICATION OF SUBJECT MATTER**
*F02D29/00*(2006.01)i

According to International Patent Classification (IPC) or to both national classification and IPC

**B. FIELDS SEARCHED**

Minimum documentation searched (classification system followed by classification symbols)
F02D29/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-335264 A (Hitachi, Ltd.), 05 December 2000 (05.12.2000), paragraph [0041]; fig. 5 & US 6319167 B1 | 1-10 |
| A | JP 61-83462 A (Honda Motor Co., Ltd.), 28 April 1986 (28.04.1986), entire text; all drawings (Family: none) | 1-10 |
| A | JP 2008-128007 A (Mitsubishi Fuso Truck and Bus Corp.), 05 June 2008 (05.06.2008), paragraphs [0005], [0042] (Family: none) | 1-10 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 June, 2011 (22.06.11) | 12 July, 2011 (12.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 532 863 A1**

**Patent documents cited in the description**

- JP 2007170316 A